# EUROPÄISCHE PATENTSCHRIFT

(11) **EP 0 709 561 B1**
(45) Veröffentlichungstag und Bekanntmachung des Hinweises auf die Patenterteilung: **22.03.2000**
(21) Anmeldenummer: 95810639.5
(22) Anmeldetag: 12.10.1995
(51) Int. Cl.: F02C 7/18, F01K 23/10

(54) **Kraftwerksanlage**
Power plant
Centrale électrique

(30) Priorität: 28.10.1994 CH 322994
(43) Veröffentlichungstag der Anmeldung: 01.05.1996
(73) Patentinhaber: ASEA BROWN BOVERI AG, 5400 Baden (CH)
(72) Erfinder: Schwyter, Stefan, CH-8156 Oberhasli (CH)

(56) Entgegenhaltungen:
- EP-A- 0 519 304
- DE-C- 4 333 439
- GB-A- 2 264 539

## Beschreibung

### Technisches Gebiet

Die vorliegende Erfindung betrifft eine Kraftwerksanlage gemäss Oberbegriff des Anspruchs 1.

### Stand der Technik

Anfallende Wärme aus einer Kühlluft-Kühlung in einer Kraftwerksanalge wird üblicherweise mittels eines Luft/Wasser-Wärmetauschers wieder nutzbar gemacht. Eine solche Schaltung ist beispielsweise aus der EP 0 519 304 bekannt. Mittels Förderpumpen wird der Druck auf der Wasserseite zur Vermeidung einer Ausdampfung über den Sattdampfdruck angehoben, und das im Kühler aufgewärmte Wasser nachträglich in einem Niederdrucksystem entspannt, in welchem es ausdampfen kann. In einer abgewandelten Lösung wird der Wärmetauscher parallel zu einem Hochdruck-Economizer eines der Gasturbogruppe nachgeschalteten Abhitzedampferzeuger betrieben. In beiden Fällen muss wegen der hohen Kühllufttemperaturen und der stark variierenden Wärmemengen mit hohen Systemdrücken gearbeitet werden. Dies hat entsprechende Verluste zur Folge. Für die Beherrschung von transienten Betriebsbereichen wie An- und Abfahren der Anlage müssen speziell bei Fällen, bei welchen ein Abhitzedampferzeuger zum Einsatz kommt, komplexe Regelkreise vorgesehen werden, welche eine Verteuerung der Anlage auslösen, die Verfügbarkeit der Anlage herabmindern, und der Wirkungsgrad der Anlage reduzieren.

Daneben zeigen die nach dem Stand der Technik zur Dampferzeugung eingesetzten Trommelkessel bei dieser Anwendung eine unzulängliche Regelbarkeit. Bei Kesseln dieser Bauart nämlich wird die Dampfmenge wesentlich durch die zur Verfügung stehende Wärme, in diesem Fall aus der Kühlluft, bestimmt. Im vorliegenden Fall ist jedoch auf möglichst einfache Weise die Austrittstemperatur der Kühlluft aus der Kühlluftkühler zu regeln. Dies ist nach dem Stand der Technik nicht befriedigend realisierbar.

### Darstellung der Erfindung

Hier will die Erfindung Abhilfe schaffen. Der Erfindung, wie sie in den Ansprüchen gekennzeichnet ist, liegt die Aufgabe zugrunde, bei einer Kraftwerksanlage und eines Verfahrens der eingangs genannten Art eine Schaltung zur Bereitstellung von Kühlluft vorzuschlagen, welche die obengenannten Nachteile zu beheben vermag.

Grundsätzlich wird die Kühlluft mittels eines als Einrohrkessel ausgebildeten Kühlluftkühlers gekühlt.

Weist die Kraftwerksanlage keinen nachgeschalteten Abhitzedampferzeuger auf, aus welchem zweckdienlich Speisewasser für den Kühlluftkühler entnommen werden kann, so soll dieses Speisewasser aus einem externen System herangezogen werden. Der aus dem Kühlluftkühler abfallenden Dampf kann dann in den Prozess an geeigneter Stelle eingeleitet werden, was mindestens eine Erhöhung der spezifischen Leistung der Anlage ergibt.

Liegt eine Schaltung im Sinne einer Kombianlage vor, so wird das Speisewasser aus dem Economizer des Abhitzedampferzeugers entnommen oder mittels einer eigenen Speisepumpe direkt aus dem Speisewasserbehälter abgezweigt, danach über Regelungsorgane dem Kühlluftkühler zugeführt. In einem Einrohrkessel werden bei gegebenen Kühlluftbedingungen und Variation der Speisewassermenge automatisch die Teilflächen des Economizers, Verdampfers und Ueberhitzers des Abhitzedampferzeugers sowie die übertragene Wärmemenge verändert. Diese Speisewassermenge wird mittels Regelorgane am Eintritt des Kühlluftkühlers geregelt, so dass auf einfache Art die Endtemperatur der Kühlluft am Ausgang dieses Kühlluftkühlers geregelt wird. Somit lässt sich sagen, dass dieser Kühlluftkühler wasserströmungsseitig die Funktion eines Zwangsdurchlauferhitzers erfüllt. Das Anfahrprozedere hierzu ist äusserst einfach, da dieser Kühlluftkühler trocken gefahren werden kann. Die Betriebstemperaturregelung mit aufgeschalteten Vorhalten der Last der stromauf des Abhitzedampferzeugers wirkenden Gasturbogruppe reichen dazu aus. Muss der Kühlluftkühler nass gefahren werden, so wird zum Trockenfahren des Kühlluftkühlers in einen Blowdown-Tank gefahren. Nach dem Ausstossen des Kühlerüberhitzer-Volumens wird die im Kühlluftkühler produzierte Dampfmenge in die Ueberhitzerstufe des Abhitzedampferzeugers geführt. In beiden Fällen wird der Ueberschussdampf mittels eines schaltungstechnisch vorgesehenen Dampfbypass in einen Hauptkondensator geleitet und dort entspannt.

Neben der einfachen und überblickbaren Regelung erreicht die Erfindung einen wesentlichen besseren Wirkungsgrad gegenüber den zum Stand der Technik gehörenden Lösungen.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnungen Ausführungsbeispiele der Erfindung näher erläutert. Alle für das unmittelbare Verständnis der Erfindung nicht erforderlichen Elemente sind fortgelassen. In den verschiedenen Figuren sind gleiche Elemente mit den gleichen Bezugszeichen versehen. Die Strömungsrichtung der Medien ist mit Pfeilen angegeben.

### Kurze Beschreibung der Zeichnungen

Es zeigt:
- Fig. 1: eine Gasturbogruppe mit einem Kühllluftkühler und
- Fig. 2: eine der Gasturbogruppe nachgeschaltete Dampferzeugung im Sinne einer Kombianlage, worin einen Kühlluftkühler integriert ist.

### Wege zur Ausführung der Erfindung, gewerbliche Verwertbarkeit

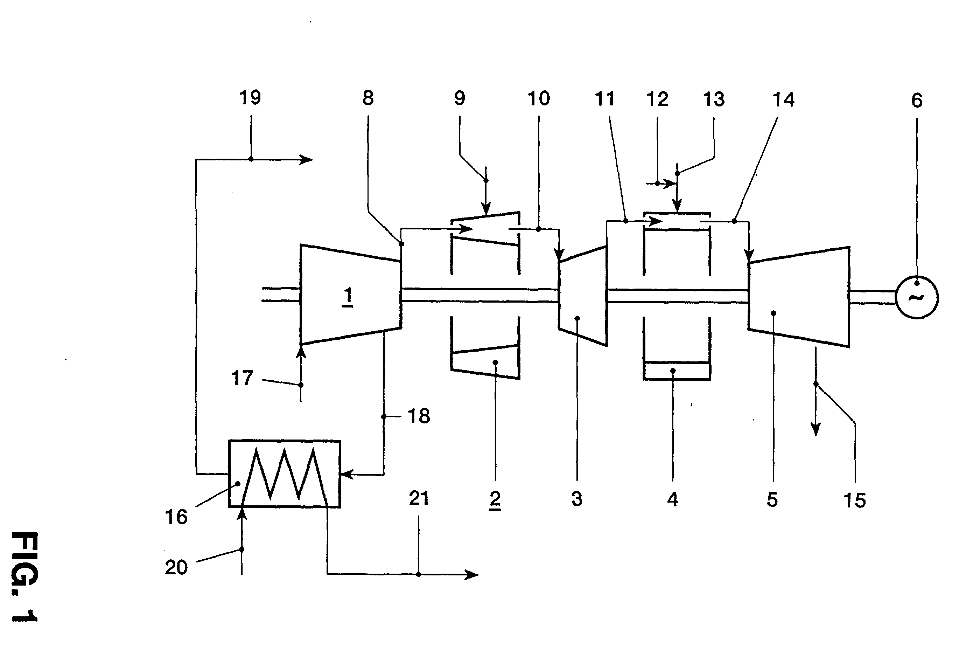

Fig. 1 zeigt eine Gasturbogruppe, welche aus einem Verdichter 1, einer dem Verdichter 1 nachgeschalteten ersten Brennkammer 2, im folgenden HD-Brennkammer genannt, einer stromab dieser Brennkammer wirkenden HD-Turbine 3, einer der HD-Turbine nachgeschalteten zweiten Brennkammer 4, im folgenden ND-Brennkammer genannt, und einer stromab dieser Brennkammer wirkenden ND-Turbine 5. Ein Generator 6 sorgt für die Stromerzeugung. Die in den Verdichter 1 eingebrachte Luft 17 wird nach erfolgter Kompression als verdichtete Luft 8 in die HD-Brennkammer 2 geleitet. Diese Brennkammer 2 wird mit einem Brennstoff 9 befeuert, der an sich gasförmig und/oder flüssig sein kann, je nach Art des in dieser Brennkammer eingesetzten Brenners. Diese Brennkammer 2 wird normalerweise mit einem Diffusionsbrenner oder Vormischbrenner, wie er in EP-A1-0 321 809 beschrieben ist, betrieben, wobei dieser Erfindungsgegenstand integrierender Bestandteil dieser Beschreibung ist. Die Heissgase 10 aus der HD-Brennkammer 2 beaufschlagen zunächst die HD-Turbine 3. Dabei ist diese Turbine 3 so ausgelegt, dass deren Abgase 11 immer eine verhältnismässig hohe Temperatur aufweisen. Stromab dieser Turbine 3 befindet sich die ND-Brennkammer 4, welche im wesentlichen die Form eines ringförmigen Zylinders hat. Diese Brennkammer 4 weist keinen separaten Brenner auf: Die Verbrennung geschieht hier durch Selbstzündung des in die Heissgase 11 eingedüsten Brennstoffes 13. Ausgehend davon, dass es sich hier um einen gasförmigen Brennstoff, also beispielsweise Erdgas, handelt, müssen für eine Selbstzündung gewisse unabdingbare Voraussetzungen erfüllt werden: Zunächst ist davon auszugehen, dass eine Selbstzündung nach vorliegender Konstellation erst bei einer Temperatur um die 1000°C vonstatten geht. Demnach, um Selbstzündung eines Erdgases in der ND-Brennkammer 4 sicherzustellen, muss demzufolge die Austrittstemperatur aus der HD-Turbine 3 sehr hoch ausfallen, und zwar, wie oben bereits dargelegt, um die 1000°C, und dies auch bei Teillastbetrieb. Diese Forderung kann aber gewichtig eine optimale thermodynamische Auslegung des Gasturbinenprozesses negativ tangieren. Selbstverständlich darf andererseits aus ebenfalls thermodynamischen Gründen das Druckverhältnis der HD-Turbine 3 nicht so weit angehoben werden, dass sich daraus eine niedrige Austrittstemperatur von beispielsweise ca. 500°C ergibt, wie sie für einen sicheren Betrieb einer nachgeschalteten konventionellen Brennkammer vorteilhaft wäre. Um aus diesem Dilemma herauszukommen, d.h. um eine gesicherte Selbstzündung des in die ND-Brennkammer 4 eingedüsten gasförmigen Brennstoffes 13 zu gewährleisten, wird diesem Gas eine kleine Menge eines anderen Brennstoffes 12 mit einer niedrigeren Zündtemperatur beigegeben. Als Hilfsbrennstoff eignet sich hier beispielsweise Oel sehr gut. Dieser flüssige Hilfsbrennstoff 12, entsprechend eingedüst, fungiert sozusagen als Zündschnur, und ermöglicht auch dann eine Selbstzündung in der ND-Brennkammer 4, wenn die Abgase 11 aus der HD-Turbine 3 eine Temperatur aufweisen, die unterhalb jener optimalen Selbstzündtemperatur für Gas von ca. 1000°C liegt. Diese Vorkehrung, Oel als Hilfsbrennstoff für eine Selbstzündung beizugeben, erweist sich als besonders vorteilhaft, wenn die Gasturbogruppe bei Teillast betrieben wird. Diese Massnahme, mit einem flüssigen Hilfsbrennstoff 12 zu operieren, ermöglicht immer eine kurze Bauart der ND-Brennkammer 4, vor allem auch deswegen, weil selbst bei Teillast eine sofortige Selbstzündung stattfindet. Diese Ausgangslage ermöglicht des weiteren den Ort der Verbrennung klar zu definieren, was sich auf eine optimierte Kühlung der Strukturen dieser Brennkammer 4 niederschlägt. Die Selbstzündung eines in die Abgase 11 der ND-Turbine 3 eingedüsten gasförmigen Brennstoffes 13 mittels Zuführung eines flüssigen Hilfsbrennstoffes 12 erweist sich auch anlässlich erster Versuche einer neuen Maschine als vorteilhaft, denn diese Fahrversuche finden naturgemäss bei einem reduzierten Temperaturniveau statt. Für diesen letztgenannten Fall ist eine Selbstzündung bei niedrigem Temperaturniveau sowieso unerlässlich. Die in der ND-Brennkammer 4 bereitgestellten Heissgase 14 beaufschlagen anschliessend die ND-Turbine 5. Das kalorische Potential der Abgase 15 aus dieser ND-Turbine 5 kann weitergehend genutzt werden, beispielsweise durch Nachschaltung eines Dampfkreislaufes zur Bereitstellung einer Dampfmenge zum Betreiben einer Dampfturbine. Analoge Verhältnisse, welche die Beigabe eines Hilfsbrennstoffs für eine Selbstzündung notwendig machen, können auch in der HD-Brennkammer 2 existieren.
Insbesondere bei einer solchen Konfiguration ist die kalorische Belastung der Brennkammern sowie der Turbinen recht hoch, weshalb die Kühlung auch äusserst effizient ausfallen muss. Dabei muss parallel noch berücksichtigt werden, dass Gasturbogruppen dieser Hochleistungsstufe im allgemeinen wenig Luft für Kühlzwecke freistellen können, sollen der Wirkungsgrad und die spezifische Leistung nicht markant sinken. Die Kühlung der kalorisch belasteten Aggregate geschieht hier solcherart, dass aus der Verdichterstufe eine Teilmenge vorverdichteter Luft 18 entnommen wird. Diese an sich durch die Kompression bereits recht stark aufgewärmte Luft durchströmt einen Kühlluftkühler 16. Die Betriebsweise des Wasserstromes 20 innerhalb des Kühlluftkühlers 16 ist hier die einer Zwangsdurchlauferhitzung in einem Einrohrkessel. Dieser Wasserstrom 20 sorgt für die Wärmetauschung innerhalb des Kühlluftkühlers 16. Auf der einen Seite wird demnach die vorverdichtete Luft 18 soweit gekühlt, dass sie anschliessend als Kühlluft 19 in die zu kühlenden Aggregate geleitet wird, wobei diese Aggregate anhand einer Parallel- oder Serie-Schaltung gekühlt werden können. Auf der anderen Seite wird das Wasser 20 durch eine entsprechende Strömungsintensität innerhalb des Kühlluftkühlers 16 energetisch zu Dampf 21 erhöht, und anschliessend vorzugsweise in den Prozess an geeigneter Stelle zur Erhöhung des Wirkungsgrades und der spezischen Leistung der Anlage eingebracht.

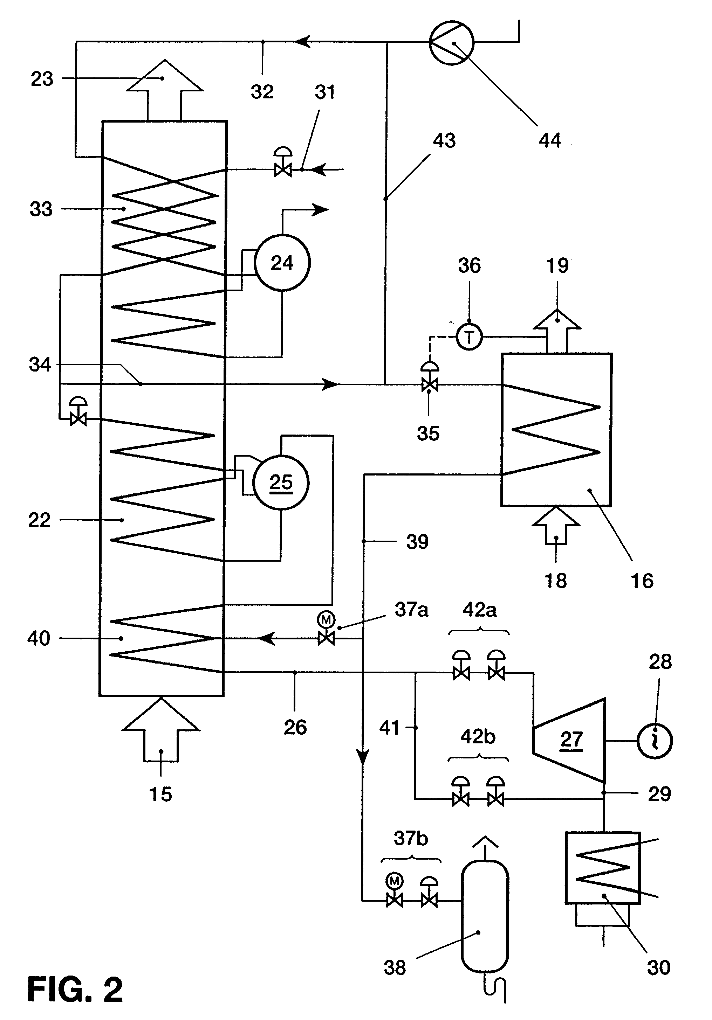

Fig. 2 zeigt einen typischen Dampfkreislauf, der vorzugsweise einer Gasturbogruppe nach Fig. 1 nachgeschaltet ist, wobei bei einer solchen Konfiguration es sich um eine Kombianlage handelt. Nach Entspannung in der letzten Turbine der vorgeschalteten Gasturbogruppe durchströmen die noch mit einem hohen kalorischen Potential versehenen Abgase 15 einen Abhitzedampferzeuger 22, in welchem anhand eines Wärmetauschverfahrens Dampf erzeugt wird, der dann das Arbeitsmedium des übrigen Dampfkreislaufes bildet. Die kalorisch ausgenutzten Abgase strömen anschliessend als Rauchgase 23 ins Freie. Beim hier gezeigten Abhitzedampferzeuger 22 handelt es sich um eine an sich bekannte mehrstufige Auslegung mit zwei Trommeln 24, 25. Aus der freigesetzten thermischen Energie im Abhitzedampferzeuger 22 wird bestimmungsgemäss ein Hochdruckdampf 26 erzeugt, der, allenfalls über einen nicht gezeigten Zwischenüberhitzer, die Beaufschlagung einer Dampfturbine 27 übernimmt. Selbstverständlich ist es möglich, nach einer erstem Teilentspannung Dampf in einem weiteren Zwischenüberhitzer wieder aufzuheizen und anschliessend damit eine Mittel- und/oder Niederdruck-Turbine zu beaufschlagen. Die anfallende Energie aus der Dampfturbine 27 wird über einen angekuppelten Generator 28 in Strom umgewandelt. Der entspannte Dampf 29 aus dieser Dampfturbine 27 wird in einem wasser- oder luftgekühlten Hauptkondensator 30 kondensiert. Durch eine stromab des Hauptkondensators 30 nicht gezeigte Kondensatpumpe wird dieses Kondensat 29 in einen ebenfalls nicht gezeigten Speisewasserbehälter und Entgaser gefördert. Eine weitere nicht gezeigte Förderpumpe pumpt anschliessend das Wasser 31 in den Abhitzedampferzeuger 22 zu einem neuerlichen Kreislauf. Eine weitere Speisewassermenge 32 durchströmt etwa parallel zum erstgenannten Wasserstrom 31 den Economizer 33 des Abhitzedampferzeugers 22. Eine Speisewassermenge 34 wird aus dem Economizer 33 oder direkt über eine Leitung 43, stromauf des Abhitzedampferzeugers 22 und stromab einer Förderpumpe 44, entnommen, und danach über ein Regelventil 35 einem nebengeordnet zum Abhitzedampferzeuger 22 geschalteten Kühlluftkühler 16 zugeführt. Dieser Kühlluftkühler 16, der wasserstromseitig als Zwangsdurchlauferhitzer wirkt, ist wiederum als Einrohrkessel ausgelegt. Auch hier wird aus vorverdichteter warmer Luft 18 Kühlluft 19 für die Kühlung kalorisch belasteter Aggregate bereitgestellt. Mittels des genannten Regelventils 35 am Eintritt des Kühlluftkühlers 16 lässt sich auf einfache Art die Kühlluft-Endtemperatur 36 regeln. Das Anfahrprozedere ist hier bei einem solchen auf trockene Fahrweise basierenden Kühlluftkühler 16 äusserst einfach, denn die Betriebstemperatur-Regelung (35, 36) mit aufgeschalteten Vorhalten der Gasturbinenlast reichen dazu aus. Muss der Kühlluftkühler 16 nass angefahren werden, so wird bis zum Trockenfahren des Kühlluftkühlers 16 über entsprechende Regelungsorgane 37a, 37b in einen Blowdown-Tank 38 gefahren. Nach dem Ausstossen des Kühler-Ueberhitzer-Volumens wird die produzierte Dampfmenge 39 in den Ueberhitzerteil 40 des Abhitzedampferzeugers 22 geführt. Ein Ueberschussdampf wird über eine Bypassleitung 41 und über entsprechende Regelorgane 42a, 42b in den Hauptkondensator 30 entspannt. Auch bei dieser Konstellation lässt sich die Integrierung dieses Kühlluftkühlers 16 in den Dampfkreislauf auf einfachste Art und Weise realisieren. Mit dieser Schaltung lässt sich der Wirkungsgrad der Anlage kräftig steigern.

### Bezeichungsliste

- 1: Verdichter
- 2: HD-Brennkammer
- 3: HD-Turbine
- 4: ND-Brennkammer
- 5: ND-Turbine
- 6: Generator
- 8: Verdichtete Luft
- 9: Brennstoff
- 10: Heissgase
- 11: Abgase
- 12: Hilfsbrennstoff
- 13: Brennstoff
- 14: Heissgase
- 15: Abgase
- 16: Kühlluftkühler
- 17: Ansaugluft
- 18: Vorverdichtete Luft
- 19: Kühlluft
- 20: Wasser
- 21: Dampf
- 22: Abhitzedampferzeuger
- 23: Rauchgase
- 24, 25: Trommeln
- 26: Hochdruckdampf
- 27: Dampfturbine
- 28: Generator
- 29: Entspannter Dampf
- 30: Hauptkondensator
- 31: Wasser
- 32: Speisewasser
- 33: Economizer
- 34: Speisewasser
- 35: Regelventil
- 36: Kühlluft-Endtemperatur
- 37a, 37b: Regelorgane
- 38: Blowdow-Tank
- 39: Dampfmenge
- 40: Ueberhitzerteil
- 41: Dampf-Bypassleitung
- 42a, 42b: Regelorgane
- 43: Wasserleitung
- 44: Förderpumpe

## Patentansprüche

1. Kraftwerksanlage, im wesentlichen bestehend aus einer Verdichtereinheit, mindestens einer Brennkammer, mindestens einer Turbine und mindestens einem Generator, wobei in die Kraftwerksanlage ein Kühlluftkühler (16) integriert ist, durch welchen ein Teil vorverdichteter oder verdichteter Luft (18) aus der Verdichtereinheit (1) strömt, dadurch gekennzeichnet, dass der Kühlluftkühler (16) als Einrohrkessel ausgebildet ist, und dass die Luftaustrittstemperatur durch die Speisewassermenge (20), welche das Ventil (35) durchströmt, und welche Wassermenge im Kühlluftkühler verdampft, regelbar ist.

2. Kraftwerksanlage nach Anspruch 1, dadurch gekennzeichnet, dass der Einrohrkessel (16) einem zu einem Dampfkreislauf gehörenden Abhitzedampferzeuger (22) nebengeordnet ist

3. Kraftwerksanlage nach den Ansprüchen 1 und 2, dadurch gekennzeichnet, dass der Einrohrkessel (16) zur Kühlung der Luftmenge (18) aus der Verdichtereinheit (1) mit einer Wassermenge aus dem Abhitzedampferzeuger (22) betreibbar ist.

4. Kraftwerksanlage nach den Ansprüchen 1 und 2, dadurch gekennzeichnet, dassmit der produzierten Dampfmenge direkt oder indirekt eine zum Dampfkreislauf gehörende Dampfturbine (27) zu beaufschlagen ist.

5. Kraftwerksanlage nach Anspruch 1, dadurch gekennzeichnet, dass eine Kühlluftmenge (19) aus dem Einrohrkessel (16) zur Kühlung thermisch belasteter Aggregate (2,3,4,5)der Kraftwerksanlage einsetzbar ist.

6. Kraftwerksanlage nach Anspruch 1, dadurch gekennzeichnet, dass der Einrohrkessel (16) bei nassem Anfahren bis zu seinem Trockenfahren über Regelorgane (37a, 37b) in einen Blowdown-Tank (38) zu fahren ist.

## Claims

1. Power plant, essentially consisting of a compressor unit, of at least one combustion chamber, of at least one turbine and of at least one generator, a cooling-air cooler (16) being integrated into the power plant, through which cooler some precompressed or compressed air (18) from the compressor unit (1) flows, characterized in that the cooling-air cooler (16) is designed as a single-pipe boiler, and in that the air-outlet temperature can be regulated by the feedwater quantity (20) which flows through the valve (35) and which quantity of water evaporates in the cooling-air cooler.

2. Power plant according to Claim 1, characterized in that the single-pipe boilder (16) is arranged next to a waste-heat steam generator (22) belonging to a steam circuit.

3. Power plant according to Claims 1 and 2, characterized in that the single-pipe boilder (16) can be operated with a water quantity from the waste-heat steam generator (22) in order to cool the air quantity (18) from the compressor unit (1).

4. Power plant according to Claims 1 and 2, characterized in that a steam turbine (27) belonging to the steam circuit can be loaded directly or indirectly with the steam quantity produced.

5. Power plant according to Claim 1, characterized in that a cooling-air quantity (19) from the single-pipe boiler (16) can be used for the cooling of thermally loaded assemblies (2, 3, 4, 5) of the power plant.

6. Power plant according to Claim 1, characterized in that the single-pipe boiler (16), during startup under wet conditions, can be operated with entry into a blowdown tank (38) via regulating members (37a, 37b) until its dry operation.

## Revendications

1. Installation de centrale thermique, se composant essentiellement d'une unité de compresseur, d'au moins une chambre de combustion, d'au moins une turbine et d'au moins un générateur, dans laquelle un refroidisseur de l'air de refroidissement (16), à travers lequel circule une partie d'air précomprimé ou comprimé (18) provenant de l'unité de compresseur (1), est intégré dans l'installation de centrale thermique, caractérisée en ce que le refroidisseur de l'air de refroidissement (16) se présente sous la forme d'une chaudière monotubulaire, et en ce que la température de sortie de l'air peut être régulée par la quantité d'eau d'alimentation (20),qui traverse la vanne (35), et quantité d'eau qui se vaporise dans le refroidisseur de l'air de refroidissement.

2. Installation de centrale thermique suivant la revendication 1, caractérisée en ce que la chaudière monotubulaire (16) est juxtaposée à un générateur de vapeur à chaleur perdue (22) faisant partie d'un circuit de vapeur.

3. Installation de centrale thermique suivant les revendications 1 et 2, caractérisée en ce que la chaudière monotubulaire (16) peut être utilisée pour le refroidissement de la quantité d'air (18) provenant de l'unité de compresseur (1) avec un débit d'eau provenant du générateur de vapeur à chaleur perdue (22).

4. Installation de centrale thermique suivant les revendications 1 et 2, caractérisée en ce qu'une turbine à vapeur (27) faisant partie du circuit de vapeur doit être alimentée directement ou indirectement avec le débit de vapeur produit.

5. Installation de centrale thermique suivant la revendication 1, caractérisée en ce qu'un débit d'air de refroidissement (19) venant de la chaudière monotubulaire (16) peut être utilisé pour le refroidissement d'ensembles (2, 3, 4, 5) de l'installation de centrale thermique sollicités thermiquement.

6. Installation de centrale thermique suivant la revendication 1, caractérisée en ce que la chaudière monotubulaire (16) doit être conduite dans un réservoir de décompression (blowdown-tank) (38) par des organes de régulation (37a, 37b) lors de son démarrage humide jusqu'à sa marche à sec.
